Europäisches Patentamt

European Patent Office

Office européen des brevets

(19)

(11) Veröffentlichungsnummer: **0 041 098**
A1

## (12) EUROPÄISCHE PATENTANMELDUNG

(21) Anmeldenummer: 81101174.1

(22) Anmeldetag: 19.02.81

(51) Int. Cl.³: **H 02 H 9/06**
**H 01 B 17/00**

(30) Priorität: 30.05.80 CH 4221/80

(43) Veröffentlichungstag der Anmeldung:
09.12.81 Patentblatt 81/49

(84) Benannte Vertragsstaaten:
DE FR GB SE

(71) Anmelder: CERBERUS AG
Alte Landstrasse 411
CH-8708 Männedorf(CH)

(72) Erfinder: Bosshard, Walter
Tödistrasse 9
CH-8712 Stäfa(CH)

(72) Erfinder: Büchler, Walter
Bahnhofstrasse 18
CH-8603 Schwerzenbach(CH)

(54) Koaxiale Durchführung.

(57) Eine koaxiale Durchführung zum Schutz elektronischer Geräte vor Ueberspannungen besteht aus einer zweiteiligen Hülse (1,2), die einen Strompfad zwischen einem Leitungsanschluss (6) und dem Geräte-Eingang (7) einschliesst, der einen gasgefüllten Ueberspannungsableiter (4), sowie eine Kapazität (5) umfasst. Der Verbindungspunkt von Ableiter (4) und Kapazität (5) ist an die Hülse (1,2) angeschlossen. Die Serie-Schaltung von Ableiter (4) und Kapazität (5) wird durch eine als Induktivität dienende Spule (8) überbrückt, die auf den Ableiter (4) oder auch auf das als Kapazität dienende Element (5) als Kern gewickelt ist. Dadurch wird ein wirksamer Schutz gegen Ueberspannungen auch mit extremer Flankensteilheit bei einfacher Herstell- und Montage-Möglichkeit und kompakter Form erreicht.

Fig. 2

## Koaxiale Durchführung

Die Erfindung betrifft eine koaxiale Durchführung mit einer einen Strompfad umschliessenden, an einer Trennfläche zu befestigenden Hülse.

Solche Durchführungen werden zum Anschluss elektronischer Geräte an die Signal- Leitungen, beispielsweise Mess-, Steuer-, Regel-, Datenübertragungs-, Nachrichtenübermittlungs- oder Telephon-Leitungen verwendet und schützen angeschlossene Geräte vor Störungen durch elektromagnetische Streufelder. Sie können wie gewöhnliche Koaxial-Stecker oder -Buchsen, beziehungsweise wie andere bekannte Durchführungen, an der Trennfläche des Gerätes, also an der Gehäusewand befestigt und dienen als Signal-Eingang des Gerätes, oder als desse Ausgang.

Durch Blitzenschläge im Leitungssystem induzierte Ueberspannungen werden jedoch durch bekannte Durchführungen an das Gerät übertragen und können zu Störungen, oder gar zur Beschädigung oder Zertörung des Gerätes führen.

Zum Schutz elektronischer Geräte vor solchen Ueberspannungen ist es bekannt, in das Gerät Ueberspannungsableiter einzubauen. Auch eine Verwendung von Blitzschutz-Steckern oder -Kupplungen, in denen eine Funkenstrecke zur Ableitung von Ueberspannungen dient, wäre naheliegend. Zwar würde der Einbau einer solchen Funkenstrecke in bekannte koaxiale Durchführungen oder die Verwendung üblicher Ueberspannungsableiter vieleStörungen durch häufig auftretende Blitzeinwirkungen der üblichen Art verhindern, aber Ueberspannungen mit besonders grosser Flankensteilheit, wie sie etwa bei Nuklear-Explosionen auftrten können, werden dadurch nicht

hinreichend von den angeschlossenen Geräten ferngehalten.
Die Folge ist der Ausfall lebenswichtiger Verbindungen
und Funktionen gerade im kritischsten Augenblick.

Der Erfindung liegt die Aufgabe zugrunde, die erwähnten
Nachteile des Standes der Technik zu beseitigen, und
insbesondere eine koaxiale Durchführung für elektronische
Geräte zu schaffen, die elektromagnetische Streufelder
sicher abschirmt und gleichzeitig Ueberspannungen auch
extrem grosser Flankensteilheit zuverlässig vom Gerät
fernhält und die Betriebssicherheit des Gerätes auch bei
extremen Verhältnissen, wie nach Nuklear-Explosionen
gewährleistet. Diese Aufgabe wird erfindungsgemäss durch
die Merkmale der Ansprüche gelöst.

Die Erfindung, sowie die besonderen Merkmale und Vorteile
derselben, werden an Hand der in den Figuren dargestellten koaxialen Durchführung beispielsweise beschrieben.
Die Erfindung ist jedoch nicht auf dieses Ausführungs-
Beispiel beschränkt. Naheliegende Abwandlungen sind
möglich, ohne den Rahmen der Erfindung zu verlassen.

Figur 1 zeigt eine koaxiale Durchführung in Aufsicht.
Figur 2 zeigt eine koaxiale Durchführung im Schnitt.
Figur 3 zeigt ein Ersatzschaltbild einer Durchführung.

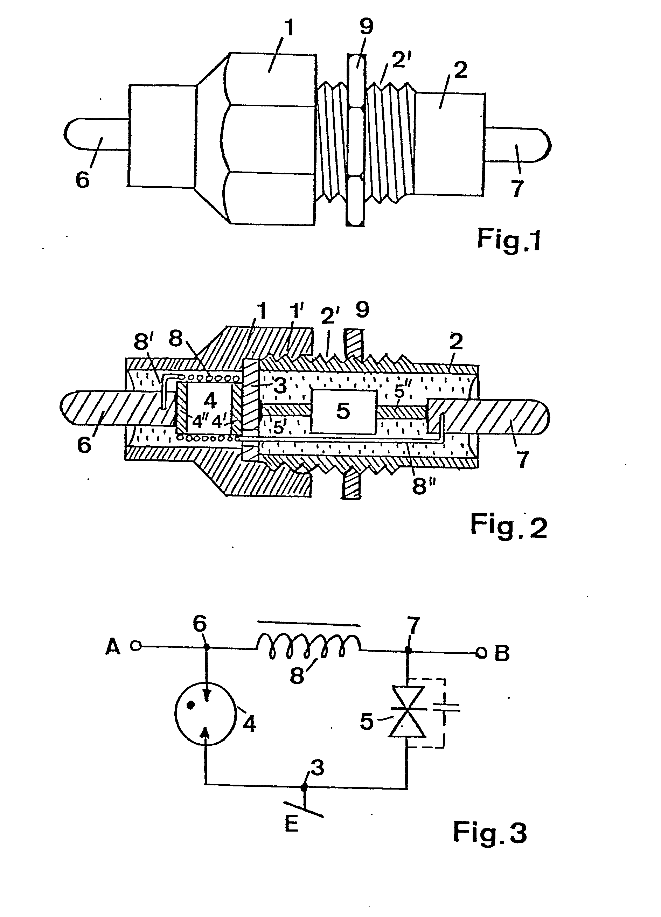

Die in den Figuren 1 und 2 dargestellt Durchführung weist
eine aus zwei Teilen 1 und 2 bestehende metallische, z.B.
Eisen-Abschirm-Hülse auf, deren beide Teile mittels
eines Innengewindes 1' und eines Aussengewindes 2' miteinander verschraubt sind. Eine in das äussere Teil 1
eingesetzte kreisförmige metallische, z.B. Nickel-Scheibe
3, die als Trennelement dient, wird durch die zusammengeschraubten Teile 1 und 2 in ihrer Position gehalten und
stellt eine stossstromfeste Verbindung mit der Hülse her.

Die Hülsen-Abmessungen können z.B. etwa 15 x 55 mm sein.

Auf eine Seite des Trennelementes 3 ist ein gasgefüllter Ueberspannungsableiter 4 aufgeschweisst. Dabei kann es sich beispielsweise um einen Ableiter des Typs Cerberus UC 230 handeln, einen Knopfableiter mit zylindrischer Gehäuseform und zwei zur Achse senkrecht orientierten Elektroden-Endflächen 4' und 4"        , wobei eine der Elektroden-Endflächen 4' an das Trennelement 3 angeschlossen ist, während die andere Elektroden-Endfläche 4" an eine Anschlussfahne 6 angeschweisst ist. Diese dient zum Anschluss an eine externe Leitung in bekannter Weise, zum Beispiel durch Löten, Schrauben, Stecken, etc.

An die andere Seite des Trennelementes 3 ist ein kapazitives Element 5 mit seiner einen Stromzuführung 5' angeschweisst. Bei diesem Element kann es sich bei einer maximal zulässigen Betriebsspannung im Niederspannungs-Bereich, z.B. 150 V, um eine reine Kapazität, also einen Kondensator von etwa 0.5 - 5 nF handeln. Bei Verwendung im Kleispannungsbereich, z.B. 5 - 60 V ist die Ausführung als Spannungsbegrenzer-Diode mit wirksamer Eigen-Kapazität vorteilhaft, z.B. eine von General Semiconductor unter dem Namen Trans-Zorb vertriebene Diode.Die andere Stromzuführung 5" des kapazitiven Elementes 5 ist an eine weitere Anschlussfahne 7 angeschweisst, die zum Anschluss an das geschützte elektronische Gerät dient, bzw. als dessen Schaltungs-Eingang, oder dessen Ausgang.

Im Hülsen-Inneren ist als induktives Element eine Spule 8 aus isoliertem 0.1 mm Cu-Draht mit ca. 5$\Omega$ angeordnet. Der Ableiter 4 kann bei einer besonders vorteilhaften Ausführung mit zylinderförmiger Gehäuseform direkt als Kern dienen, auf den die Spule gewickelt ist. Ein Spulen-Ende 8' ist an der Anschlussfahne 6 befestigt, z.B. angeschweisst oder gelötet, während das andere Spulen-Ende 8" durch ein Loch oder eine Kerbe 3' der Trennscheibe 3 hindurch zur anderen Anschlussfahne 7 geführt wird. Statt des Ableiters kann auch das kapazitive Element als Spulenkern dienen.

Die beschriebene Durchführung kann in einfacher Weise an einer Trennfläche, z.B. in einer Bohrung der Frontplatte des Gehäuses eines zu schützenden elektronischen Gerätes montiert werden, indem sie mittels einer auf das Aussengewinde 2' des Hülsenteiles 2 aufgesetzten Mutter 9 festgeschraubt wird.

Figur 3 zeigt ein Ersatz-Schaltbild der beschriebenen Durchführung. Zwischen der ungeschützten, dem Leitungs-Anschluss dienenden Seite A und der vorzugsweise auf Erdpotential liegenden Hülse E liegt als Grobschutz der Ueberspannungsableiter 4. Zwischen Seite A und Seite B, dem Anschluss des elektronischen Gerätes, ist das induktive Element 8 angeordnet, dessen Induktivität und ohmscher Widerstand zusammen mit dem zwischen Seite B und Hülse E liegenden kapazitiven Element 5, beispielsweise einer bipolaren Spannungsbegrenzer-Diode für den Feinschutz sorgt und Ueberspannungen auf ein unschädliches Mass dämpft.

Die beschriebene Durchführung ist dank ihres einfachen und kompakten Aufbaus leicht und ohne wesentliche Erhöhung des Fabrikationsaufwandes in den für übliche Durchführungen benötigten geringen Abmessungen herstellbar und leicht anstelle solcher Verbindungen montierbar, wobei ein erheblich verbesserter Schutz vor Ueberspannungen, speziell mit extrem grosser Flankensteilheit erzielbar ist. Spule und Hülse bewirken zusammen eine extreme HF-Dämpfung.

**0041098**

- 1 -

PATENTANSPRUECHE

1. Koaxiale Durchführung mit einer einen Strompfad umschliessenden, an einer Trennfläche zu befestigenden Hülse, dadurch gekennzeichnet, dass innerhalb der Hülse (1, 2) koaxial dazu und zueinander ein gasgefüllter Ueberspannungsableiter (4), ein induktives (8) und ein kapazitives (5) Element angeordnet sind.

2. Durchführung nach Anspruch 1, dadurch gekennzeichnet, dass der Ueberspannungsableiter (4) und das kapazitive Element (5) in der Hülse (1, 2) axial hintereinander auf der gemeinsamen Achse angeordnet sind.

3. Durchführung nach Anspruch 2, dadurch gekennzeichnet, dass eine Elektrode (4') des Ueberspannungsableiters (4) mit einer Seite eines leitend mit der Hülse (1, 2) verbundenen Trennelementes (3) und dessen andere Elektrode (4") mit einer Anschlussfahne (6) verbunden ist, und dass eine Stromzuführung (5') des kapazitiven Elementes (5) mit der anderen Seite des Trennelementes (3) und dessen andere Stromzuführung (5") mit einer weiteren Anschlussfahne (7) verbunden ist.

4. Durchführung nach Anspruch 3, dadurch gekennzeichnet, dass das Trennelement als kreisförmige, an ihrem Umfang die Innenwand der Hülse (1, 2) berührende Scheibe (3) ausgebildet ist.

5. Durchführung nach einem der Ansprüche 2 - 4, dadurch gekennzeichnet, dass das induktive Element (8) den Ueberspannungsableiter (4) umschliesst, und dass dessen Anschlüsse (8', 8") mit je einer Anschlussfahne (6, 7) verbunden sind.

6. Durchführung nach einem der Ansprüche 1 - 4, dadurch gekennzeichnet, dass die Hülse aus zwei miteinander verschraubten Teilen besteht, wobei ein Teil (1) den Ueberspannungsableiter und der andere Teil (2) das kapazitive Element umschliesst.

7. Durchführung nach Anspruch 6, dadurch gekennzeichnet, dass ein Trennelement (3) in einen Teil (1) der Hülse eingestzt ist und durch den eingeschraubten Teil (2) der Hülse in seiner Position gehalten wird.

8. Durchführung nach einem der Ansprüche 1 - 4, dadurch gekennzeichnet, dass das induktive Element (8) als Drahtspule mit dem Ueberspannungsableiter (4) oder dem kapazitiven Element (5) als Kern ausgebildet ist.

9. Durchführung nach einem der Ansprüche 1 - 4, dadurch gekennzeichnet, dass der Ueberspannungsableiter (4) als Knopfableiter mit zylindrischer Gehäuseform und zwei parallelen, zur gemeinsamen Achse senkrecht orientierten Elektroden-Endflächen (4', 4") ausgebildet ist.

10. Durchführung nach einem der Ansprüche 1 - 4, dadurch gekennzeichnet, dass das kapazitive Element (5) als Spannungsbegrenzer-Diode ausgebildet ist.

Fig.1

Fig.2

Fig.3

# EUROPÄISCHER RECHERCHENBERICHT

Europäisches
Patentamt

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | GB – A – 985 166 (DALE ELECTRONICS) <br> * Seite 1, Zeilen 32 bis 46, 68 bis Seite 2, Zeile 38; Fig. 1, 2 * <br> -- | 1,5,8 |
| | DE – U – 7 740 188 (SIEMENS) <br> * Anspruch 1; Fig. * <br> -- | 9 |
| A | DE – B2 – 2 022 318 (SIEMENS) <br> * Anspruch; Spalte 1, Zeilen 29 bis 39; Fig. 2 * <br> -- | |
| A | DE – U – 7 729 132 (ROHDE & SCHWARZ) <br> * Seite 9, Zeile 24 bis Seite 10, Zeile 4; Fig., Position 14 * <br> -- | |
| A | US – A- 3 934 175 (O.M. CLARK) <br> * Zusammenfassung; Fig. 6 * <br> -- | |
| A | US – A – 3 781 724 (L. MOORE et al.) <br> * Zusammenfassung; Fig. 5 * <br> ---- | |

### KLASSIFIKATION DER ANMELDUNG (Int. Cl.³)

H 02 H    9/06
H 01 B  .17/00

### RECHERCHIERTE SACHGEBIETE (Int. Cl.³)

H 01 B   17/00
H 01 B   17/26
H 01 B   17/30
H 01 R   17/10
H 01 R   17/12
H 02 M    9/06
H 05 K    9/00

### KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 26-08-1981 | LEMMERICH |